# EUROPEAN PATENT APPLICATION

(11) **EP 1 845 526 A2**
(43) Date of publication of application: **17.10.2007**
(21) Application number: 07102396.4
(22) Date of filing: 14.02.2007
(51) Int. Cl.: G11B 7/243, G11B 7/257

(54) **Dual-layer recordable optical recording medium**

(30) Priority: 15.02.2006 JP 2006038514; 17.03.2006 JP 2006073896; 03.10.2006 JP 2006272259; 09.01.2007 JP 2007001225
(71) Applicant: Ricoh Company, Ltd., Tokyo 143-8555 (JP)
(72) Inventor: Fujii, Toshishige Ricoh Company Ltd., Tokyo 143-8555 (JP); Sasa, Noboru Ricoh Company Ltd., Tokyo 143-8555 (JP); Hayashi, Yoshitaka Ricoh Company Ltd., Tokyo 143-8555 (JP); Fujiwara, Masayuki Ricoh Company Ltd., Tokyo 143-8555 (JP); Miura, Hiroshi, Taihaku-ku, Sendai-shi Miyagi (JP); Shinotsuka, Michiaki Ricoh Company Ltd., Tokyo 143-8555 (JP); Shinkai, Masaru Ricoh Company Ltd., Tokyo 143-8555 (JP); Sekiguchi, Hiroyoshi Ricoh Company Ltd., Tokyo 143-8555 (JP); Iwasa, Hiroyuki Ricoh Company Ltd., Tokyo 143-8555 (JP); Yamada, Katsuyuki Ricoh Company Ltd., Tokyo 143-8555 (JP); Narumi, Shinya Ricoh Company Ltd., Tokyo 143-8555 (JP); Kato, Masaki, Machida-shi Tokyo (JP)
(74) Representative: Barz, Peter

(57) **Abstract**

A dual-layer recordable optical recording medium, including: a first information layer; intermediate layer disposed over the first information layer; and second information layer disposed over the intermediate layer, the first information layer, intermediate layer, and second information layer being sequentially deposited from a laser irradiation side, wherein the first information layer comprises, from the laser irradiation side, at least a thin film containing Bi as a main ingredient, dielectric layer, reflective layer and thermal diffusion layer, and the second information layer comprises, from the laser irradiation side, at least a thin film containing Bi as a main ingredient, dielectric layer and reflective layer, and wherein the ratio of the thickness of the dielectric layer of the second information layer (t2) to the thickness of the dielectric layer of the first information layer (t1), t2/t1, is in a range of 0.7 to 1.5 or 4.5 to 6.0.

## Description

### BACKGROUND OF THE INVENTION

### Field of the Invention

The present invention relates to a recordable (Write Once Read Many (WORM)) optical recording medium capable of high-density recording thereon even over a blue laser wavelength range and, more specifically, to a dual-layer recordable optical recording medium having at least a first information layer, an intermediate layer, and a second information layer.

### Description of the Related Art

Examples of' optical recording media capable of recording by irradiation with a laser beam are, for example, recordable optical recording media such as CD-R and DVD-R. These optical recording media are supported for compatibility with CD-ROM and DVD-ROM in terms of information reproduction and are used both as small scale-distribution media and storage media. At present, however, organic dye-based CD-R and DVD-R are used in most cases, which are manufactured in quantities at low costs. Manufacture of' a recordable optical recording medium provided with inorganic recording layer(s) entails an increase in manufacturing costs if the number of layers to be deposited is large, and hence the commercial value of' the disc is reduced. For this reason, recordable optical recording media have been proposed that have a minimum number of layers. Meanwhile, there are some types of recordable optical recording media: ablative type, phase change type, alloying type, etc. The ablative recording holds promise in light of cost, but has a problem of low C/N ratio (Carrier to Noise ratio), which is caused due to the presence of' a polka-dot film melted in the pits on the disc and/or the presence of' a melted film on the peripheries of the pits. In addition, as the ablative recording media adopts a single layer structure, general recording films cannot support high reflectance of ROM discs, resulting in products that do not meet standards

Materials suitable for ablative recording include Te-Au compounds and Te-Ag compounds (see for instance Japanese Patent Application Laid-Open (JP-A) Nos. 60-179952 and 60-179953), but these materials have boiling points of 1,000°C or higher, resulting in optical recording media with poor sensitivity.

In contrast to the phase change recording disc that is only required to raise the recording film temperature to its melting point for recording, the ablative recording disc requires a large amount of heat in order to raise the recording film temperature to its boiling point or higher. For this reason, the ablative recording disc requires higher laser power than the phase change disc, and upon high-linear velocity recording on the ablative recording disc, it results in semiconductor laser power shortage. Thus, the ablative recording disc requires high-sensitive recording films.

JP-A No. 57-157790 discloses an invention that aims to increase recording sensitivity by depositing a corrosion-resistant metallic layer onto the first layer that releases volatile ingredients at 400°C or below, but does not aim to increase reflectance. Accordingly, compatibility with ROM discs cannot be established. In addition, although the invention uses Au, Ag, and the like as corrosion-resistant metals, they have extremely high thermal conductivity and thus energy generated by heating is dissipated by diffusion, resulting in low effects of enhancing recording sensitivity and the resultant optical media are not suitable for high-linear velocity recording..

As the alloying recording, JP-A No. 04-226784 discloses a recording method that comprises irradiating both a layer made of Ge, Si, or Sn and a layer made of Au, Ag, Al, or Cu with a laser beam to thereby alloy the two metallic layers together. This method, however, results in low-to-high recording, and compatibility with ROM discs cannot be established.

JP-A No. 01-162247 discloses an invention in which a phase change recording film made of In-Te alloy is formed, which the invention aims to provide a phase change optical recording medium by setting the ratio of In to Te to 2:1 to 1:1 or 2:3 to 2:5. In this invention, however, initialization of the recording layer is necessary because the freshly deposited recording film is amorphous, which is low in reflectance For this reason, the number of necessary steps for initialization increases, so too does the manufacturing costs..

Japanese Patent (JP-B) No. 2948899 discloses an invention relating an optical recording medium that includes a first layer made of Ag-Zn alloy (a thin phase changeable alloy film) and a second layer made primarily of' an element selected from Te, Se, and S (a thin low-melting point film), for recording information thereon by means of mutual diffusion of' the constituent ingredients between the two layers. This recording medium, however, is disadvantageous in terms of takt time and manufacturing costs because the first and second layers are made thick for high reflectance - 300-700Å for the first layer and 500-1,500Å for the second layer. An investigation conducted by the present inventors indicated that this high reflectance achieved by thickening the first and second layers resulted in poor recording sensitivity, because thermal absorption hardly occurred on the recording films due to their high reflectance that led to low thermal absorption. Thus, this recording medium cannot be used as a medium that requires high-linear velocity, such as DVD. In addition, since Ag is highly reactive with Te, Se, etc.., and thus reactions occurred between the two layers only by irradiation of the recording medium with a laser beam or by leaving the disc to stand, the reflectance of the recording layers reduced.

JP-A No. 11-34501 discloses a recording medium that includes as a first layer a thin film made primarily of' In, and as a second layer a thin film containing the Group 5B element(s) and the Group 6B element(s) of' the periodic table, wherein information is recorded thereon by utilizing reflectance change achieved by reaction or alloying between the two layers. However, this recording medium was found to be significantly unstable due to the high reactivity between In and Te or the like, as was the recording medium disclosed in JP-B No. 2948899.

The foregoing problems have significantly prevented widespread use of recordable optical recording media that include recording layer(s) made of inorganic material plus a small number of' other layers.

In the past, the present inventors filed an application for a patent for an invention relating to a recordable optical recording medium that uses a blue laser beam (Japanese Patent Application No. 2004-363010), the content of which will be briefly described below..

That is, the recordable optical recording medium described in the prior application is characterized in that a recording layer (Re layer) made primarily of bismuth oxide, an inorganic layer, is provided in stead of a conventional organic thin film that served as a heat generation layer owing to its optical absorption function and as a recording layer that utilizes changes in its refraction index (or birefringence) due to decomposition or degeneration.

The prior application describes importance of the layer configuration of the recording medium, and establishes that an optimized layer configuration results in significant advantages. The present inventors have already confirmed that the use of a recording layer made primarily of bismuth oxide in a recordable optical recording medium that supports for blue laser recording can result in remarkably excellent recording/reproduction characteristics.

In recent years, single-side, dual-layer discs are proposed for increased storage capacity of recordable optical recording media (e.g., see JP-A Nos. 2003-200663 and 2003-203383, and International Symposium on Optical Memory 2003 (ISOM 2003) Preprints, p.74).

The optical recording media provided with a Re layer, which are under development by the present inventors, record information thereon primarily on the principle of Bi crystallization. The media designing is of significantly importance in order to obtain recording media with high recording sensitivity and proper reflectance.

However, since Bi contained in the Re layer in the above-noted prior application offers a high crystallization rate, it is necessary to rapidly dissipate heat, for example, to a nearby reflective layer so as to prevent lateral expansion of marks. To be more specific, Bi is an element that requires a mechanism for rapid cooling of' the medium, and discs with thin reflective layers, like single-side, dual-layer discs, have a problem that formation of' small marks becomes difficult.

JP-A Nos. 08-50739 and 2000-222777 disclose a single-layer phase change optical recording medium and a dual-layer phase change optical recording medium, respectively, wherein a thermal diffusion layer (a layer for assisting diffusion of' heat, which was the reflective layer's function) is deposited onto the reflective layer by using a nitride or carbide having a relatively high thermal conductivity and low optical absorbance, so that a rapid cooling mechanism similar to that described above is established. This strategy is considered to be effective in overcoming such drawbacks as those described above, which emerge when the reflective layer constituting the first information layer is made thin..

Nitrides and carbides, however, are more likely to generate cracks on the thermal diffusion layer due to their high stress, resulting in insufficient overwrite characteristics in the optical disc provided with a thermal diffusion layer.

Moreover, carbides absorb light to a great extent particular at shorter wavelengths, leading to a problem that the transmittance of the first information layer made of carbide cannot be made large in such a next-generation system as the Blu-ray Disc system employing violet-blue laser.

### SUMMARY OF THE INVENTION

It is an object of the present invention to solve the foregoing conventional problems and to provide a dual-layer recordable optical recording medium which offers high reflectivity and high sensitivity and which has a simple layer configuration capable of realizing a large refraction index and small absorption coefficient over the recording/reproduction beam wavelength range for high-density recording.

The foregoing problems are overcome by the present invention..

The dual-layer recordable optical recording medium of the present invention includes: a first information layer; an intermediate layer disposed over the first information layer; and a second information layer disposed over the intermediate layer, the first information layer, the intermediate layer, and the second information layer being sequentially deposited from a laser irradiation side, wherein the first information layer comprises, from the laser irradiation side, at least a thin film containing Bi as a main ingredient (Re layer), a dielectric layer, a reflective layer and a thermal diffusion layer, and the second information layer comprises, from the laser irradiation side, at least a thin film containing Bi as a main ingredient (Re layer), a dielectric layer and a reflective layer, and wherein the ratio of' the thickness of the dielectric layer of the second information layer (t2) to the thickness of the dielectric layer of the first information layer (t1), t2/t1, is in a range of 0.7 to 1.5 or 4.5 to 6.0.

According to the present invention, in a dual-layer recordable optical recording medium in which a Re layer is used as a recording layer, it is possible to improve recording characteristics of' the first information layer by use of the thermal diffusion layer of the present invention. Thus, it is possible to provide a dual-layer recordable optical recording medium which offers high reflectivity and high sensitivity and which has a simple layer configuration capable of' realizing a large refraction index and small absorption coefficient over the recording/reproduction beam wavelength range for high-density recording.

### BRIEF DESCRIPTION OF THE DRAWINGS

FIG. 1 is a graph of' specific resistance vs. PRSNR of a thermal diffusion layer.
FIG. 2 is a graph of T2/T1 vs. PRSNR.
FIG. 3 is a graph of' thickness vs. PRSNR of' the thermal diffusion layer..
FIG. 4 is a graph of t2/t1 vs. PRSNR.
FIG. 5 is a graph of t2/t1 vs. sensitivity.
FIG. 6 is a schematic cross-sectional view showing an example of the dual-layer recordable optical recording medium of the present invention.
FIG. 7 is a graph of thermal conductivity vs, PRSNR in Example 12.
FIG. 8 is a graph of thermal conductivity vs. Pw of a thermal diffusion layer in Example 12.
FIG. 9 is a graph of T2/T1 vs. PRSNR in Example 13.
FIG. 10 is a graph of T2/T1 vs Pw in Example 13.
FIG. 11 is a graph of t2/t1 vs PRSNR in Example 14
FIG. 12 is a graph of t2/t1 vs. Pw in Example 14.
FIG. 13 is a graph of storage time vs. PRSNR of a first information layer in Example 17.

### DESCRIPTION OF THE PREFERRED EMBODIMENTS

Hereinafter, the present invention will be described in more detail. As a basic layer configuration, the dual-layer recordable optical recording medium of' the present invention includes, from the laser irradiation side, at least a thin film containing Bi as a main ingredient (Re layer), a dielectric layer, and a reflective layer, which are sequentially deposited.

As used herein, the term "thin film containing Bi as a main ingredient (Re layer)" refers to a Re layer containing Bi as an essential ingredient in a proportion of 30 atomic% or more of the total constituent elements excluding oxygen; for example, if the Re layer is composed of Bi, Fe, and O (oxygen), Bi makes up 30 atomic% or more of the total proportion of Bi and Fe.

In the optical recording medium of the present invention, the Re layer is a layer that performs a main optical absorption function. The Re layer is made of material that exhibits normal diffusion, rather than material that has a wide absorption band over a particular wavelength range like organic materials, and therefore, birefringence is less dependent on the wavelength. Accordingly, the use of the Re layer can significantly overcome such conventional problems that recording characteristics (e.g., recording sensitivity, degree of modulation, jitter, and error rate), reflectance, etc. greatly change because of variations in the wavelength of recording/reproduction lasers, which variations are caused due to differences among individual laser beam sources, changes in the environmental temperature, etc.

In a known, conventional recordable optical recording medium, an organic thin film serves both as a recording layer and as an optical absorption layer. For this reason, it is indispensable for organic materials that are to be used in this conventional medium to have a large refraction index (n) and relatively small absorption coefficient (k) over a recording/reproduction beam wavelength range. Thus the organic thin film needs to be made relatively thick enough to raise the film temperature to a level that causes decomposition of the organic material Moreover, in the case of' a conventional phase change optical recording medium, the groove in the substrate needs to be very deep..

As a result of the extensive studies conducted by the present inventors, it was established that the layer configuration as disclosed in the present invention and the use of' a specific compound in the thermal diffusion layer results in low jitter and high PRSNR. Note that "PRSNR" stands for "Partial Response Signal to Noise Ratio," a measure which allows simultaneous expression of the S/N of the reproduction signal and the linearity of an actual waveform and theoretical PR waveform, and which is one of the measures necessary when estimating the bit error rate on a disc. The amplitude information obtained from the waveform of the reproduction beam is subjected to special process to create a signal of' interest, and the difference of this signal from the actual reproduction signal is standardized as PRSNR. Larger PRSNR values indicate more higher signal quality; in general, it is said that PRSNR needs to be 15 or more to ensure that the error rate falls within a practical range.

In the present invention, in order to prepare a single-side, dual-layer disc using Re layers, the reflective layer of' the first information layer needs to be thin enough to ensure sufficient admission of' light. As described above, since Bi offers a high crystallization rate, it is necessary to rapidly dissipate heat to nearby layers such as the reflective layer so as to prevent lateral expansion of marks. More specifically, Bi is an element that requires a mechanism for rapid cooling of the medium, and discs with thin reflective layers have a problem that formation of small marks becomes difficult.

To avoid this problem, as described in the present invention, it is possible to establish a rapid cooling mechanism even in a disc with a thin reflective layer, by providing therein a thermal diffusion layer made of material that contains an electrically conductive oxide with a specific resistance of' 1x 10⁻¹ Ωcm or less, whereby formation of small marks is made possible and PRSNR can be remarkably increased.

It is also desirable that the thermal diffusion layer have a low light absorption over a wavelength range of' the laser beam to be adopted, to ensure that information can be recorded on or read out from the second information layer. Moreover, the thermal diffusion layer preferably has an extinction coefficient of 0.5 or less, mole preferably 0.3 or less, over the laser beam wavelength range. An extinction coefficient of greater than 0.5 results in greater light absorption at the first information layer, making recording/reproduction difficult on the second information layer.

Examples of materials that satisfy these properties and are electrically conductive include In₂O₃, SnO₂, ZnO, CdO, TiO, CdIn₂O₄, Cd₂SnO₂, and Zn₂SnO. However, ITO (In₂O₃-SnO₂) and IZO (In₂O₃-ZnO) are preferable thermal diffusion layer materials in light of their high thermal conductivity. These oxides may be used singly or in combination.

Because it is necessary for a dual-layer recordable optical recording medium to admit light to a level that enables recording/reproduction on/from the second information layer while ensuring recording characteristics that enable recording on the first information layer, the balance between the reflective layer thickness and the thermal diffusion layer thickness is extremely important. The present inventors established that it is possible to provide a good balance between the recording/reproduction characteristics of the first and second information layers and thus to achieve excellent signal characteristics and recording sensitivity on both of the information layers, by making the ratio of' the thickness of' the thermal diffusion layer of' the first information layer (T2) to the thickness of the reflective layer of the first information layer (T1), i.e., T2/T1, fall within a range of 2 to 8. A T2/T1 value of less than 2 results in too high reflectance of the first information layer and the amount of' light reaching the second information layer decreases, leading to poor sensitivity and low PRSNR in the second information layer, whereas a T2/T1 value of greater than 8 results in too high transmittance of' the first information layer, leading to poor sensitivity and low PRSNR in the first information layer.

In addition, it is possible to maintain a rapid cooling mechanism for media even in a disc with thin reflective layers by setting the thickness of the thermal diffusion layer of' the first information layer to 30-90nm, thereby enabling formation small marks and achieving a significant increase in PRSNR.

While it is important to adopt such a rapid cooling mechanism in view of' the properties of Bi as described above, if the thickness of' the thermal diffusion layer of the first information layer is less than 30nm, formation of' small marks in a disc with thin reflective layers becomes difficult, thus resulting in a sharp reduction in signal characteristics. If the thickness of' the thermal diffusion layer of the first information layer is greater than 90nm, the degree of thermal diffusion increases and the sensitivity of' the first information layer decreases.

By making the ratio of the thickness of' the dielectric layer of the second information (t2) to the thickness of the dielectric layer of the first information layer (t1), t2/t1, fall within a range of' 0.7 to 1.5 or 4.5 to 6.0, an optimal balance is struck between the transmittance of' the first information layer and the reflectance of the second information layer, whereby excellent recording characteristics (i.e., PRSNR, reflectance, and sensitivity) can be realized on both of the information layers.

A t2/t1 value of' less than 0.7 results for instance in high reflectance of the first information layer, which in turn causes a transmittance reduction, resulting in poor sensitivity of the second information layer. A t2/t1 value of greater than 1.5 and less than 4.5 results in a significant increase in the reflectance of' the second information layer to cause, as is expected, a significant reduction in the sensitivity of the second information layer and in PRSNR. A t2/t1 value of' greater than 6.0 results in an overly thick dielectric layer in the second information layer, which leads to deformation of the substrate and/or groove due to heat generated upon film formation, and in an increase in the reflectance of' the second information layer, which causes a significantly reduction its sensitivity..

More specifically, by optimizing the thickness ratio between the dielectric layers of' the first and second information layers, it is possible to achieve, with a relatively simple layer configuration, high PRSNR, high reflectance, and high sensitivity on both of' the information layers.

An optimal balance is struck between the transmittance of the first information layer and the reflectance of' the second information layer if layer thicknesses are selected as follows: the Re layer of' the first information layer = 5-25nm, the dielectric layer of' the first information layer = 10-30nm, the Re layer of' the second information layer = 5-25nm, and the dielectric layer of the second information layer = 10-30nm; or the Re layer of' the first information layer = 5-25nm, the dielectric layer of the first information layer = 10-30nm, the Re layer of' the second information layer = 5-25nm, and the dielectric layer of' the second information layer = 90-120nm. With this layer configuration, it is possible to ensure excellent recording characteristics (i.e., PRSN, reflectance, and sensitivity) on both of the information layers.

If the thickness of' any of' the Re and dielectric layers of the first information layer falls outside the foregoing ranges, it results in a reduction in the transmittance of the first information layer and a significant reduction in the sensitivity and PRSNR of the second information layer. If the thickness of' any of the Re and dielectric layers of the second information layer falls outside the foregoing ranges, it results in a significant increase in the reflectance of' the second information layer, resulting in a reduction in the sensitivity and PRSNR of the second information layer.

More specifically, by optimizing the thicknesses of the Re and dielectric layers of each of the first and second information layers, it is possible to achieve, with a relatively simple layer configuration, high PRSNR, high reflectance, and high sensitivity on both of the information layers.

It is also preferable to deposit a layer that contains as a main ingredient a representative element-containing compound, i.e., a representative element-containing compound layer, at a position closer to the laser irradiation side than is the Re layer. The substrate is generally permeable and contains moisture and/or oxygen. Accordingly, when the recording layer or the like is in contact with the substrate, oxidization of this layer occurs which causes deterioration in the recording characteristics. The provision of' such a representative element-containing compound layer between the substrate and the recording layer can prevent permeation of moisture and/or oxygen for improved archivability. Note, however, that the presence of such a compound layer causes little change in the recording characteristics; there is no problem regarding the reliability of optical recording media with a general specification.

Examples of compounds used for the representative element-containing compound layer include aluminum oxides (e.g., Al₂O₃), ZnS-SiO₂, and indium tin oxide (ITO).

Herein the foregoing term "main ingredient" means that the representative element-containing compound is contained in an amount of 30 mol% or more of the total material amount. In general, any one of the foregoing compounds is used.

The representative element-containing compound layer is preferably 70nm or less in thickness. A thickness of greater than 70nm results in a longer film deposition time, leading to a longer takt time, harmful results such as deformation of the substrate and/or groove due to heat for film deposition, and poor recording characteristics. If the representative element-containing compound layer is made too thin, full prevention of' permeation of moisture and oxygen cannot be achieved; therefore, the representative element-containing compound layer is desirably about 20nm or more in thickness.

For the Re layer, a layer containing a Bi oxide as a main ingredient is used. Here, the term "main ingredient" means that Bi is used in such an amount that the requirement described above is met.

By using a Bi oxide as a material of the Re layer, it is possible to obtain extremely high PRSNR and high reflectance.

Such a Re layer can be deposited for instance by sputtering of' such a target as a Bi oxide or a Bi alloy oxide, or by sputtering of' Bi or a Bi alloy in the atmosphere of mixed gas of argon and oxygen.

The Re layer contains one or more elements (M) selected from Al, Cr, Mn, Sc, In, Ru, Rh, Co, Fe, Cu, Ni, Zn, Li, Si, Ge, Zr, Ti, Hf, Sn, Pb, Mo, V, B, and Nb. The content of' the element (M) is selected from 30-40 wt% so that best recording characteristics can be obtained,

The addition of the element (M) in the Re layer can realize excellent recording performance with respect to blue laser beams. Obtaining modulation by making the crystal structures of non-recorded areas different from those of recording marks has conventionally been conducted in the phase change recording. In the present invention, recording marks are formed in the presence of' mixed crystals of' two or more different oxides, and thus the difference in refraction index between the recording mark and non-recorded area increases, obtaining a higher degree of modulation. Moreover, the presence of the crystals of a single element in addition to the crystals of' each oxide lead to a greater effect. It is also possible to prevent crystal growth by the presence of different elements or crystals with different crystal structures. More specifically, recording marks made of' two or more different elements and/or two or more different crystals with different crystal structures are prevented from expanding and growing into large marks. Thus it is made possible to form small recording marks.

Materials of' the dielectric layer are selected in view of their refraction index, thermal conductivity, chemical stability, mechanical strength, adhesiveness, etc. In general, oxides, sulfides, nitrides, and carbides of metals or semiconductors, which are highly transparent and have high melting points, and fluorides of Ca, Mg, Li and the like can be used.

Preferred materials are composite dielectrics that contain (1) at least one species selected from ZnS, ZnO, TaS₂, and a rare-earth sulfide in an amount of 50-90 mol% and (2) a heat-stable compound with a melting point or decomposition point of 1,000°C or higher.

Examples of heat-stable compounds with a melting point or decomposition point of 1,000°C or higher include oxides, nitrides, and carbides of Mg, Ca, Sr, Y, La, Ce, Ho, Er, Yb, Ti, Zr, Hf, V, Nb, Ta, Zn, Al, Si, Ge, Pb and the like, and fluorides of Ca, Mg, Li and the like.. Materials that contain ZnS and SiO₂ as main ingredients are preferable.. Here the term "main ingredient" means that ZnS and SiO₂ are contained in amounts of 50 mol% or more of the total material amount; in general, however, only ZnS and SiO₂ are used. The mixing ratio of' ZnS to SiO₂ preferably ranges from 70:30 to 90:10 (mol%). It is possible to obtain higher PRSNR and to increase reflectance within this range If it falls outside this range, it results in a deviation from an optimal combination of refraction index (n) and absorption coefficient (k) with respect to the thickness of' the other layers. Thus it becomes difficult to obtain excellent recording characteristics on the information layers.

Note that the foregoing oxides, sulfides, nitrides, carbides, and fluorides do not necessarily have to have a stoichiometric composition; for the control of, for example, the refraction index of the dielectric layer, the elemental proportions may be changed. Alternatively, these compounds may be used in combination.

Preferably, the representative element contained in the representative element-containing compound layer is at least one element selected from Zn, In, Al, and Sn. By providing such a representative element-containing compound layer between the substrate and Re layer, the stability of' the resultant disc in the environmental test atmosphere significantly increases Moreover, one of the features of' such a compound layer is that it entails no adverse consequences, such as low reflectance.

Examples of' compounds containing such representative elements include ZnS, ZnS-SiO₂, InO₂, SnO₂, Al₂O₃, and AlN.

The intermediate layer preferably absorbs less light over a wavelength range of' a laser beam to be applied for recording/reproduction Suitable materials of the intermediate layer are resins in view of their moldability and costs; for example, UV curable resins, slow curing resins, and heat reversible resins can be used.. In addition, a double-faced adhesive tape for optical disc bonding (DA-8321, an adhesive sheet made by NITTO DENKO Corporation) and the like can also be used.

The intermediate layer allows an optical pickup to optically distinguish the first information layer from the second information layer upon recording or reproduction, and is preferably 10-70µm in thickness.

The optical recording medium of the present invention may be formed by combining various known layers in addition to the layers recited in the appended claims.

Materials of the substrate are not particularly limited as long as they are thermally and mechanically stable and, in the case of' recording/reproduction from the substrate side (i.e., through the substrate), have an excellent transmittance.

Examples of substrate materials include polycarbonate, methyl polymethacrylate, amorphous polyolefins, cellulose acetate, and polyethylene terephthalate; among these, polycarbonate and amorphous polyolefins are suitable.

The thickness of the substrate is not particularly limited; it can be appropriately determined according to the intended purpose.

Materials of the reflective layer are preferably those that exhibit sufficiently high reflectance over a wavelength range of the laser beam for reproduction

For example, metals such as Au, Al, Ag, Cu, Ti, Cr, Ni, Pt, Ta, and Pd can be used singly or as an alloy thereof. In particular, Au, Al, and Ag have high reflectance and thus are suitable as the reflective layer material.

Additional element(s) may be added to the reflective layer in addition to any of' the foregoing elements or alloy thereof contained as a main ingredient.. Examples of such an additional element include metals and semi-metals, such as Mg, Se, Hf, V, Nb, Ru, W, Mn, Re, Fe, Co, Rh, Ir, Zn, Cd, Ga, In, Si, Ge, Te, Pb, Po, Sn, and Bi. An reflective layer made primarily of Ag is most preferable in view of its production low cost and high reflectance.

Alternatively, it is possible to adopt a reflective layer, which is a multilayered film composed of alternating low-refraction index thin films and high-refraction index thin films, both of' which are made of' material other than metal.

Examples of the method of forming the reflective layer includes sputtering, ion plating, chemical vapor deposition, and vacuum vapor deposition.

The reflective layer is preferably 10-25nm in thickness for the first information layer, and is preferably 50-200nm for the second information layer.

When a ZnS-SiO₂ layer is deposited adjacent to a reflective layer made of Ag or the like, S present in ZnS-SiO₂ is gradually mixed with Ag, whereby recording characteristics may be degraded and/or reflectance may be reduced. To avoid this, a layer called sulfuration prevention layer may be provided between the reflective layer and ZnS-SiO₂ layer where appropriate. Examples of' materials of such a layer include oxides such as SiO, ZnO, SnO₃, Al₂O₃, TiO₃, and In₂O₃; nitrides such as Si₃N₄, AlN, and TiN; and carbides such as SiC. Among these compounds, SiC is a suitable compound which is often used, and therefore can be used in the present invention where necessary.

In order, for instance, to improve reflectance, recording characteristics and adhesiveness, a known upper coat layer, under coat layer or adhesion layer, which are either inorganic or organic, may be provided over the substrate and/or under the reflective layer.

Where appropriate, a protective layer may be provided over the reflective layer and/or between other layers. Any known materials can be adopted for the protective layer as long as they are capable of protecting layers from any external force.

Examples of organic materials adopted for the protective layer include thermoplastic resins, thermosetting resins, electron beam curable resins, and UV curable resins, and examples of inorganic materials include SiO₂, Si₃N₄, MgF₂, and SnO₂.

Examples of the method of' forming the protective layer are coating methods such as spin coating and casting, sputtering, and chemical vapor deposition, as in the case of the recording layer; among these methods, spin coating is most preferable.

A protective layer made of thermoplastic resin or thermosetting resin can be prepared by dissolving the resin into a suitable solvent and applying the solution over another layer, followed by drying.

A protective layer made of' UV curable resin can be prepared by applying the resin over another layer as it is or by dissolving the resin into a suitable solvent and applying the solution over the layer, followed by irradiation with ultraviolet light. For the UV curable resin, for example, acrylic resins such as urethane acrylate, epoxy acrylate and polyester acrylate can be employed.

These materials may be used singly or in combination, and the protective layer may be a multilayered film rather than a single layer film.

The thickness of the protective layer is generally within a range of 0.1 µm to 100µm, more preferably 3 µm to 30µm.

The layer configuration of' the optical recording medium of the present invention is not specifically limited to one in which information is recorded on or reproduced from the disc by application of a laser beam from the substrate side. The optical recording medium of' the present invention may have a layer configuration in which a cover layer is disposed on the top layer and a laser beam is applied from the cover layer side for recording and reproduction.

It is necessary to provide such a cover layer in a case where a lens with a high numerical aperture (NA) is to be used for high-density recording. If' such a lens is to be used, the thickness of' the layer through which the reproduction layer passes needs to be reduced. This is because the allowable amount of aberration caused by the tilt angle of the disc surface relative to the optical axis of' the optical pickup (tilt angle is proportional to the square of the product of the reciprocal number of the wavelength of the laser source and numerical aperture of the objective lens) decreases with increasing NA, and thus the tilt angle affects the amount of' aberration. Accordingly, the substrate is made thin enough to ensure that the influence of' the tilt angle on the amount of aberration is minimized.

To realize this, the following optical recording media are proposed: An optical recording medium wherein a recording layer is disposed on a substrate by forming grooves and pits thereon, a reflective layer is formed on the recording layer, and a thin, light permeable cover layer is disposed over the reflective layer, so that information recorded in the recording layer is reproduced by application of' a reproduction laser beam from the cover layer side; and an optical recording layer wherein a reflective layer is disposed over a substrate, a recording layer is disposed over the reflective layer, and a light permeable cover layer disposed over the recording layer, so that information recorded in the recording layer is reproduced by application of' a reproduction laser beam from the cover layer side. Note upon manufacture of these optical media that layer deposition starts with the cover layer to which a laser beam is incident.

With this layer configuration, it is possible to increase NA of the objective lens by making the cover layer thin. That is, it is possible to further increase recording density by providing such a cover layer and performing recording and reproduction from the cover layer side..

The cover layer is generally formed from a polycarbonate sheet or UV curable resin. The cover layer used in the present invention may have an additional layer that serves to attach the cover layer to other layers.

The laser beam applied to the optical recording medium of the present invention preferably has a shorter wavelength for high-density recording. Particularly, laser beams of 350-530nm wavelengths are preferable, and laser beams with a central wavelength of 405nm can be cited as a representative example thereof.

### Examples

Hereinafter, the present invention will be described in detail with reference to Examples, which however shall not be construed as limiting the invention thereto.

### (Example 1)

### <Preparation of Dual-Layer Recordable Optical Recording Media>

First and second substrates made of polycarbonate resin were first prepared, each of which is 120mm in diameter and 0.58mm in thickness and has a groove (depth = 21nm; track pitch = 0.43µm) on its surface.

In single-wafer sputtering equipment (Balzers), a representative element-containing compound layer which is made of Al₂O₃ and 20nm in thickness, a Re layer which is made of Bi₂O₃ and 20nm in thickness, a dielectric layer which is made of ZnS-SiO₂ (80:20(mol%)) and 20nm in thickness, a reflective layer which is made of Ag and 15nm in thickness, and a thermal diffusion layer which is made of IZO and 50nm in thickness, were sequentially deposited on the first substrate to form a first information layer.

In a similar way, a reflective layer which is made of' Ag and 100nm in thickness, a dielectric layer which is made of ZnS-SiO₂ (80:20(mol%)) and 20nm in thickness, and a Re layer which is made of Bi₂O₃ and 20nm in thickness, were sequentially deposited on the second substrate to form a second information layer.

A coating solution that contains UV curable resin (DVD03, a resin produced by NIPPON KAYAKU CO.., LTD.) was applied by spin coating over the surface of the thermal diffusion layer of the first information layer, followed by coating of' the surface of the Re layer of' the second information layer with UV curable resin in a similar manner.. The first and second information layers were then bonded together under vacuum pressure. Subsequently, the UV curable resin was cured by irradiation with UV light from the first substrate side to form an intermediate layer of 30µm thickness.

In this way a dual-layer recordable optical recording medium was prepared in which the first information layer, intermediate layer, second information layer, and second substrate are sequentially stacked on the first substrate (see FIG.. 6).

Furthermore, in this Example, SiO₂ was mixed with IZO in the thermal diffusion layer of the first information layer in different amounts to alter its electrical conductivity, and their specific resistance values were measured. Dual-layer recordable optical recording media with the foregoing layer configuration were prepared, which include the thermal diffusion layers with different amounts of SiO₂, followed by measurement of PRSNR values of the thermal diffusion layers to evaluate the relationship between specific resistance and PRSNR. PRSNR was evaluated by ODU-1000, an evaluation device manufactured by PulseTec, wherein random patterns were written on the disc rotating at a linear velocity of 6.61 m/s under the following condition: laser wavelength = 405nm, NA = 0..6, and clock frequency = 64.8 MHz.

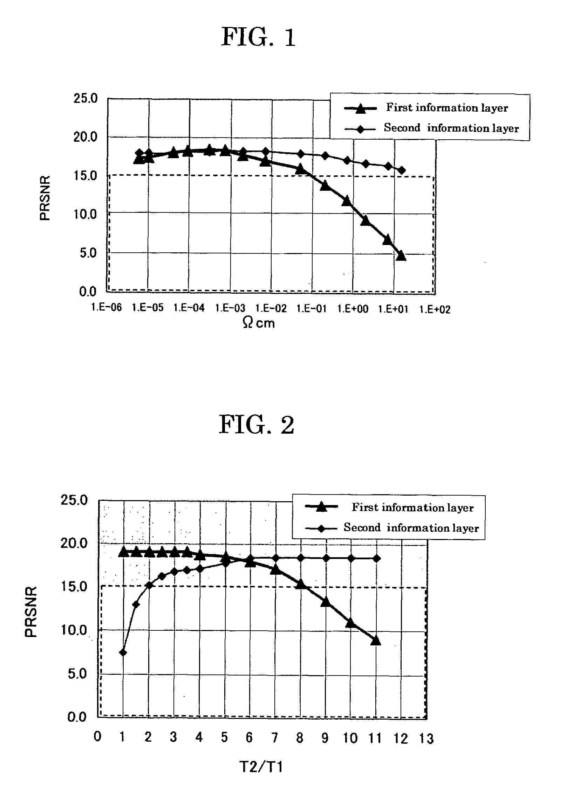

As can be seen from the measurement results shown in FIG. 1, the line corresponding to the signal characteristics of' the first information layer showed a rapid decline at above 1x10⁻¹ Ωcm, i.e., with decreasing electric conductivity. This is considered to be due to the use of such thin reflective layers as described above, which prevented sufficient thermal diffusion and made formation of small pits difficult. Note in this evaluation that the PRSNR value of less than 15 was considered below the standard (HD DVD-R standard requires PRSNR of 15 or more).

Moreover, the use of a thermal diffusion layer of' the first information layer, which is made of ITO rather than IZO, resulted in similar results.

### (Example 2)

Dual-layer recordable optical recording media were manufactured in a manner similar to that described in Example 1 except that various T2/T1 ratios were set by changing T1 (the thickness of' the Ag reflective layer of' the first information layer) and T2 (the thickness of' the IZO thermal diffusion layer), and PRNSR values were measured. More specifically, various T2/T1 ratios were obtained by setting the Ag reflective layer thickness (T1) to 10nm, 15nm and 20nm and by setting various thicknesses (T2) for each thickness

As can be seen from the measurement results shown in FIG. 2, the line corresponding to PRSNR of' the second information layer showed a rapid decline at T2/T1 < 2, and the line for PRSNR of the first information layer showed a rapid decline at T2/T1 > 8.

### (Example 3)

Dual-layer recordable optical recording media were manufactured in a manner similar to that described in Example 1 except that thermal diffusion layers with various thicknesses were used.. PRSNR values were then measured.

As can be seen from the measurement results shown in FIG.. 3, the line corresponding to PRSNR of' the first information layer showed a rapid decline at the thermal diffusion layer thickness < 30nm, and the line for PRSNR of' the second information layer showed a decline at the thermal diffusion layer thickness > 90nm.

### (Example 4)

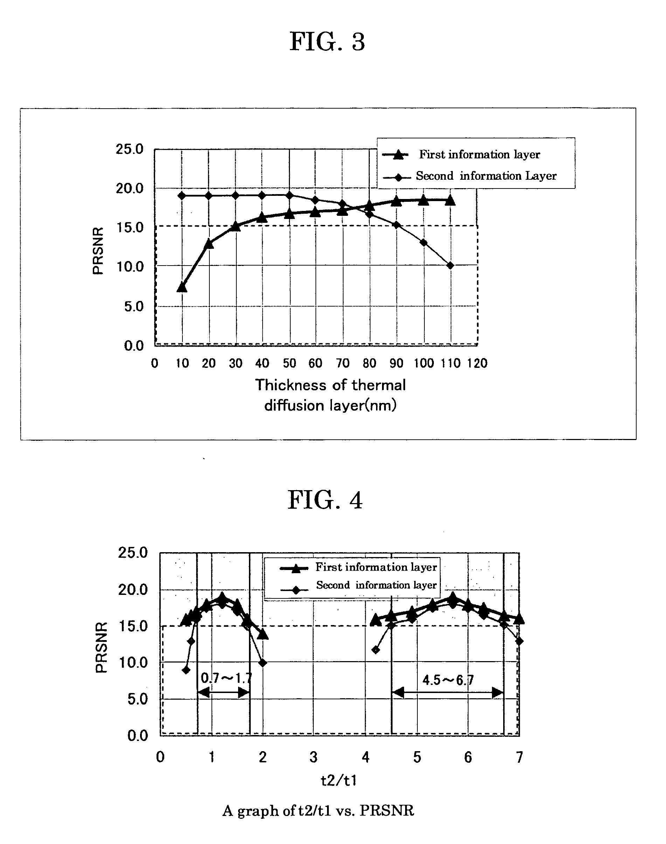

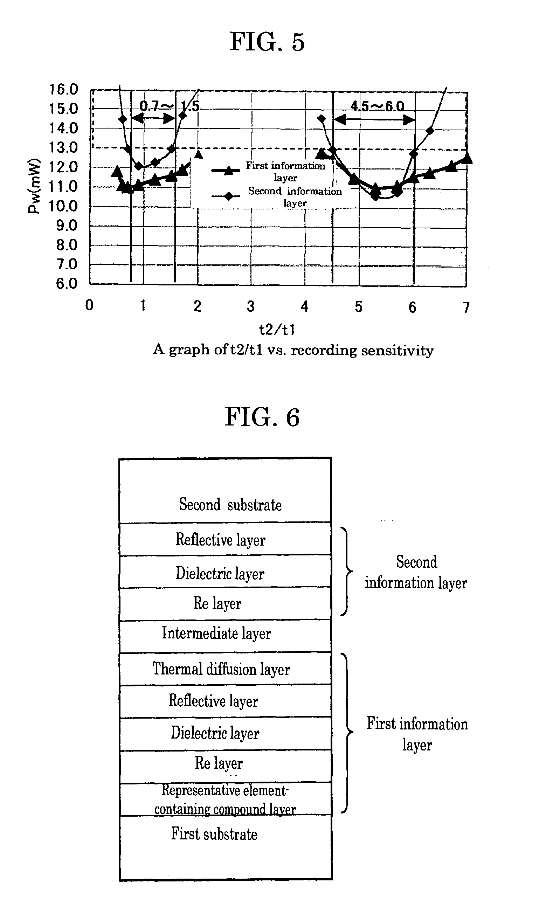

Dual-layer recordable optical recording media were manufactured in a manner similar to that described in Example 1 except that dielectric layers of the first information layer which have various thicknesses (t1) and dielectric layers of the second information layer which have various thicknesses (t2) were used. PRSNR and sensitivity were then measured. The measurement results are shown in FIGS. 4 and 5. Sensitivity was measured using ODU-1000 (PulseTec), wherein at a fixed erase power level (3mW), recording was performed at different recording power levels to determine an optimal recording power level that provides the highest PRSNR; the longitudinal axis of the graph shown in FIG.. 5 represents recording power level.. In this evaluation, discs with PRSNR of' less than 15 and sensitivity (Pw) of greater than 13mW were considered below the standard.

As can be seen from FIGS. 4 and 5, both the first and second information layers offered excellent PRSNR and sensitivity in the t2/t1 range of 0.7 to 1..5, or 4.5 to 6.0. When t1/t2 fell outside of this range, however, the sensitivity of the second information layer particularly decreased, so too did PRSNR. This is due primarily to the fact that reflectance became so high because of' a non-optimal combination of refraction index (n) and absorption coefficient (k) of' ZnS-SiO₂ with respect to its thickness, that it departed from an optimal range within which recording is possible..

### (Example 5)

Dual-layer recordable optical recording media were manufactured in a manner similar to that described in Example 1 except that the thickness of' the representative element-containing compound layer of the first information layer was set to 0-70nm, the thickness of' the Re layer of the first information layer was set to 5-25nm, the thickness of' the dielectric layer of the first information layer was set to 10-30nm, the thickness of' the Re layer of' the second information layer was set to 5-25nm, and the thickness of' the dielectric layer of the second information layer was set to 10-30nm or 90-120nm.

These media offered PRSNR values ranging from 20 to 30, satisfying the HD DVD-R standard that requires PRSNR of 15 or more, and offered reflectance values ranging from 5% to 7%, satisfying the HD DVD-R standard that requires reflectance of 4.5% or more. Moreover, Pw (sensitivity) of' the media were excellent; it succeeded in writing the media at a power level of 9-11mW.

It should be noted that sensitivity decreases with increasing reflectance, and therefore, it is necessary to introduce higher power during recording. High-power recording, however, results in significant adverse influences on adjacent marks or tracks, which may in turn cause PRSNR reduction.

### (Example 6)

Dual-layer recordable optical recording media were manufactured in a manner similar to that described in Example 1 except that to Bi₂O₃ in the Re layer was added one or more elements (M) selected from Al, Cr, Mn, Sc, In, Ru, Rh, Co, Fe, Cu, Ni, Zn, Li, Si, Ge, Zr, Ti, Hf, Sn, Pb, Mo, V, B, and Nb. Evaluations were then made as in Example 1.

It was established that the addition of such element(s) can further improve PRSNR and sensitivity.

### (Example 7)

Dual-layer recordable optical recording media were manufactured in a manner similar to that described in Example 1 except that the ZnS-to-SiO₂ ratio in the dielectric layers (ZnS-SiO₂ layer) of' the first and second information layers was changed in a range of 70:30 to 90:10.

Within this ZnS-to-SiO₂ ratio range, it succeeded in obtaining such high PRSNR values that satisfied the HD DVD-R standard (PRSNR = 15 or more), and both the first and second information layers showed proper reflectance that satisfied the HD DVD-R standard (reflectance = 4.5% or more), and excellent sensitivity. It was also established that if this ratio falls outside the range, it results in a deviation in its optimal combination of refraction index (n) and absorption coefficient (k) with respect to the thickness of the other layers, making it difficult to obtain excellent recording characteristics on the information layers.

### (Examples 8 to 10)

Dual-layer recordable optical recording media were manufactured in a manner similar to that described in Example 1 except that the material of' the compound layer of' the first information layer was changed to ZnS-SiO₂ (80:20 (mol%)) (Example 8), InO₂ (Example 9), and SnO₂ (Example 10) and that the thickness of each compound layer was set to 60nm.

PRNSR measurements conducted on these dual-layer recordable optical recording media as in Example 1 revealed that it succeeded in obtaining high PRSNR values for all of the media prepared in Examples 8 to 10, which the values satisfied the HD DVD-R standard (PRSNR = 15 or more), and that both the first and second information layers showed proper reflectance satisfying the HD DVD-R standard (reflectance = 4.5% or more), and excellent sensitivity.

Note, however, that it was established that even though such a compound layer is used, it results in a deviation from an optimal combination of' refraction index (n) and absorption coefficient (k) with respect to the thickness of the other layers, provided that the thickness of that compound layer exceeds 70nm. This makes it difficult to obtain excellent recording characteristics on the information layers.

### (Example 11)

Dual-layer recordable optical recording media were manufactured in a manner similar to that described in Example 1 except that to the Re layer formed of a Bi₂O₃ film was added one or more elements (M) selected from Al, Cr, Mn, Sc, In, Ru, Rh, Co, Fe, Cu, Ni, Zn, Li, Si, Ge, Zr, Ti, Hf, Sn, Pb, Mo, V, B, and Nb. Evaluations were then made as in Example 1.

The measurement results are shown in Table 1, which indicate that the addition of' one or more of' the foregoing elements (M) can further improve PRSNR and sensitivity.

**Table 1**

| Element M contained in Re layer | First information layer | | Second information layer | |
|---|---|---|---|---|
| | PRSNR | Optimal power (mW) | PRSNR | Optimal power (mW) |
| Al | 20 | 10.2 | 22 | 10.2 |
| Cr | 19 | 10.8 | 23 | 10.7 |
| Mn | 21 | 10.2 | 24 | 10.4 |
| Sc | 22 | 10.5 | 26 | 10.7 |
| In | 20 | 9.8 | 23 | 10 |
| Ru | 19 | 10.1 | 22 | 10.3 |
| Rh | 19 | 9.9 | 24 | 10.2 |
| Co | 24 | 10.2 | 25 | 10.3 |
| Fe | 25 | 10 | 27 | 10.4 |
| Cu | 24 | 10.3 | 27 | 10.5 |
| Ni | 26 | 9.9 | 27 | 10.1 |
| Zn | 24 | 9.5 | 24 | 9.7 |
| Li | 21 | 9.8 | 23 | 10 |
| Si | 20 | 10 | 22 | 10.4 |
| Ge | 23 | 10.1 | 24 | 10.4 |
| Zr | 20 | 10 | 23 | 10.2 |
| Ti | 24 | 10.3 | 26 | 10.5 |
| Hf | 20 | 10.3 | 24 | 10.4 |
| Sn | 26 | 9.5 | 28 | 9.9 |
| Pb | 21 | 9.5 | 22 | 9.7 |
| Mo | 21 | 9.9 | 24 | 9.9 |
| V | 19 | 10.4 | 22 | 10.5 |
| Nb | 19 | 10.5 | 21 | 10.5 |
| B | 27 | 9.2 | 29 | 9.4 |

### (Example 12)

### <Preparation of Dual-Layer Recordable Optical Recording Media>

First and second substrates made of polycarbonate resin were first prepared, each of which is 120mm in diameter and 0.59mm in thickness and has a groove (depth = 21nm; track pitch = 0.40µm) on its surface

In single-wafer sputtering equipment (Balzers), a representative element-containing compound layer which is made of' ZnS-SiO₂ (80:20(mol%)) and 40nm in thickness, a Re layer which is made of' Bi₂O₃ and 20nm in thickness, a dielectric layer which is made of ZnS-SiO₂ (80:20(mol%)) and 20nm in thickness, a reflective layer which is made of Ag and 15nm in thickness, and a thermal diffusion layer which is made of In₂O₃-ZnO-SnO₂-SiO₂ (proportion ratio = 1: 4.73: 4: 1.63 (mol)) and 50nm in thickness, were sequentially deposited on the first substrate to form a first information layer.

In a similar way, a reflective layer which is made of Ag and 80nm in thickness, a dielectric layer which is made of ZnS-SiO₂ (80:20(mol%)) and 20nm in thickness, and a Re layer which is made of Bi₂O₃ and 20nm in thickness, were sequentially deposited on the second substrate to form a second information layer.

A coating solution that contains UV curable resin (DVD03, a resin produced by NIPPON KAYAKU CO., LTD.) was applied by spin coating over the surface of' the thermal diffusion of' the first information layer and the surface of' the Re layer of the second information layer. The first and second information layers were then bonded together under vacuum pressure. Subsequently, the UV curable resin was cured by irradiation with UV light from the first substrate side to form an intermediate layer of 25µm thickness.

In this way a dual-layer recordable optical recording medium was prepared in which the first information layer, intermediate layer, second information layer, and second substrate are sequentially stacked on the first substrate (see FIG. 6).

Furthermore, SiO₂ was added to the thermal diffusion layer of the first information layer in different amounts to obtain various values of thermal conductivity. Dual-layer recordable optical recording media with the layer configuration shown in FIG.. 6 were prepared, which include the thermal diffusion layers with different amounts of SiO₂, followed by measurement of PRSNR and recording power level to evaluate the relationship between specific resistance and PRSNR of the thermal diffusion layer. PRSNR was evaluated by ODU-1000 (PulseTec), wherein random patterns were written on the disc rotating at a linear velocity of 6.61 m/s under the following condition: laser wavelength = 405nm, NA = 0.6, and clock frequency = 64.8 MHz. Recording power (Pw) was then measured using ODU-1000, wherein at a fixed erase power level (3mW), recording was performed at different recording power levels to determine an optimal recording power level that provides the highest PRSNR. Note that low Pw value means high sensitivity. Evaluation criteria were as follows: discs that showed PRSNR of 15 or more and Pw of 13mW or less, as required by the HD DVD-R standard, were considered acceptable.

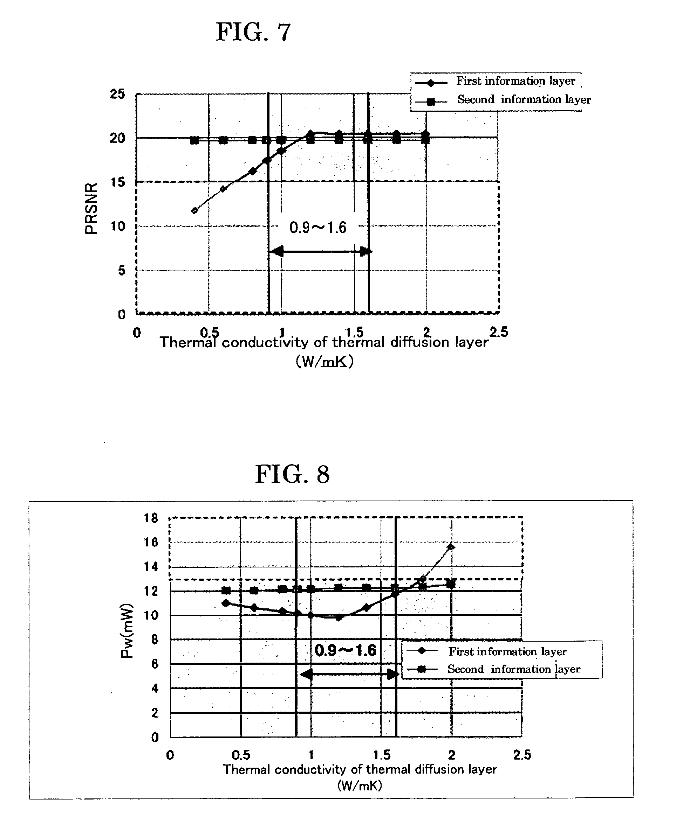

As can be seen from the results shown in FIGS. 7 and 8, PRSNR decreases toward 15 as thermal conductivity becomes less than 0.9W/mK, and becomes lower than 15 as thermal conductivity further decreases. When thermal conductivity exceeds 1.6W/mK, Pw (sensitivity) increases toward 13mW, and when the thermal conductivity further continues to increase, Pw exceeds 13mW. Note, however, that these values are not particuarly limited; they vary depending on the layer configuration of disc.

Even when the proportion ratio of In₂O₃-ZnO-SnO₂-SiO₂ of the thermal diffusion layer was changed in a range of' 1:4-6:3-5:1-2, it succeeded in obtaining nearly the same results. This proportion ratio can be changed within the foregoing range according to the type of the information layer.

### (Example 13)

Dual-layer recordable optical recording media were manufactured in a manner similar to that described in Example 12 except that various T2/T1 ratios were set by changing T1 (the thickness of the Ag reflective layer of' the first information layer) and T2 (the thickness of the thermal diffusion layer). Evaluations were then made by measuring PRSNR and recording power level. More specifically, various T2/T1 ratios were obtained by changing the Ag reflective layer thickness (T1) in a range of 8-15nm and by setting various thermal diffusion layer thicknesses (T2) for each Ag reflective layer thickness (T1). Evaluation criteria were the same as in Example 12.

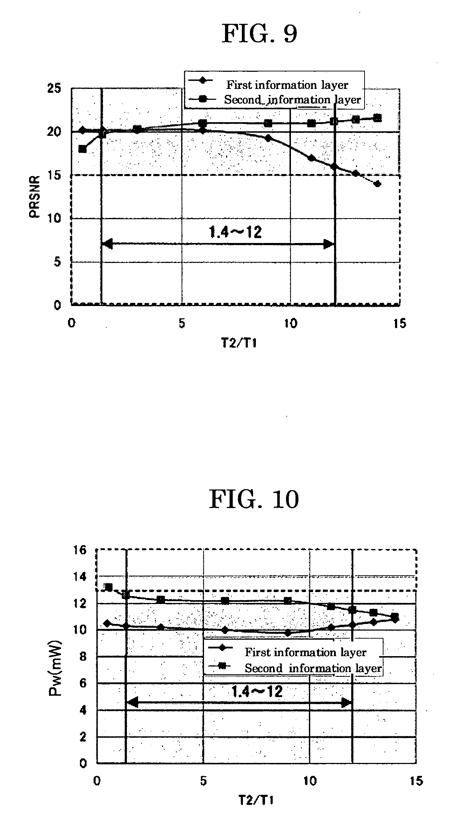

As can be seen from the measurement results shown in FIGS. 9 and 10, Pw (sensitivity) of the second information layer increases toward 13mW as T2/T1 becomes less than 1.4, and as T2/T1 further decreases, Pw exceeds 13mW. This is considered to be due to the fact that reflectance of the first information layer increased so high that the amount of light reaching the second information layer reduced. On the other hand, as T2/T1 exceeds 12, PRSNR of the first information layer decreases toward 15, and when T2/T1 further increases, PRSNR becomes lower than 15. This is due to the fact that transmittance of the first information layer increased too much. Note also that these values are not particularly limited; they vary depending on the layer configuration of disc.

Meanwhile, when T2/T1 falls within a range of 1.4 to 12, T2 ranges from 21nm to 96nm.. Even when the reflective layer is made thin (T1: 8-15nm), it is possible to establish a rapid cooling mechanism (structure) to form small marks, and to achieve a significant increase in PRSNR.

As described above, it is important to adopt such a rapid cooling mechanism in view of' the properties of Bi. If T2 is less than 21nm while T1 is in a range of 8nm to 15nm, formation of small marks in a disc with thin reflective layers becomes difficult, resulting in a reduction in Pw (sensitivity) of the second information layer If T2 is greater than 96nm, the degree of thermal diffusion increases, resulting in a rapid reduction in PRSNR of the first information layer.

### (Example 14)

Dual-layer recordable optical recording media were manufactured in a manner similar to that described in Example 12 except that dielectric layers of' the first information layer which have various thicknesses (t1) and dielectric layers of' the second information layer which have various thicknesses (t2) were used. Evaluations were then made by measuring PRSNR and recording power level. Evaluation criteria were the same as in Example 12.

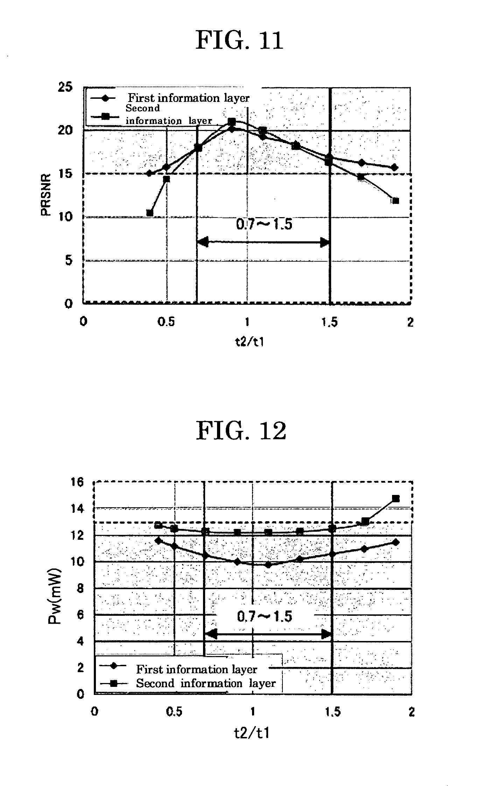

As can be seen from the results shown in FIGS. 11 and 12, the first and second information layers offered excellent PRSNR (not less than 15) and Pw (not greater than 13mW) when t2/t1 is in a range of 0.7 to 1.5 However, once t2/t1 fell outside of this range, it caused a reduction particularly in PRSNR of the second information layer to below 15. This is considered to be due to the fact that reflectance became so high because of a non-optimal combination of refraction index (n) and absorption coefficient (k) of ZnS-SiO₂ with respect to its thickness, that it departed from an optimal range within which recording is possible. Note also that these value are not particularly limited; they vary depending on the layer configuration of disc.

### (Example 15)

Dual-layer recordable optical recording media were manufactured in a manner similar to that described in Example 12 except that the thickness of the representative element-containing compound layer of the first information layer was set to 0-70nm, the thickness of the Re layer of the first information layer was set to 5-25nm, the thickness of' the dielectric layer of the first information layer was set to 10-30nm, the thickness of the Re layer of the second information layer was set to 5-25nm, and the thickness of the dielectric layer of the second information layer was set to 10-30nm.

These media offered PRSNR values ranging from 20 to 30, satisfying the HD DVD-R standard that requires PRSNR of 15 or more, and offered reflectance values ranging from 5% to 7%, satisfying the HD DVD-R standard that requires reflectance of 4.5% or more. Moreover, Pw (sensitivity) of the media were excellent; it succeeded in writing the media at a power level of 9-11mW. As described above, it should be noted that Pw (sensitivity) decreases with increasing reflectance, and therefore, it is necessary to introduce higher power during recording. High-power recording, however, results in significant adverse influences on adjacent marks or tracks, which may in turn cause PRSNR reduction.

### (Example 16)

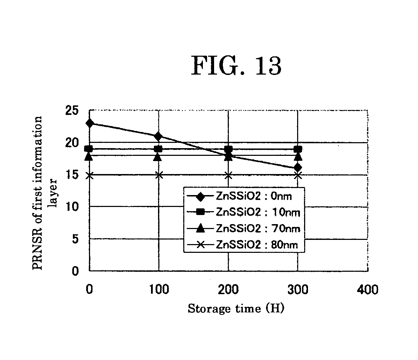

Dual-layer recordable optical recording media were manufactured in a manner similar to that described in Example 12 except that the thickness of' the representative element-containing compound layer of the first information layer was set to 0nm, 10nm, 70nm, and 80nm. Storage tests were then performed by placing them into a constant-temperature bath (temperature = 80°C, humidity = 85%). The PRSNR of' the first information layer of each of' the dual-layer recordable optical recording media was measured every 100 hours in a manner shown in Example 12. As shown in FIG. 13, the first information layers of the media that are provided with the representative element-containing compound layer offered excellent archivability.

However, the media with the compound layer of 80nm thickness barely succeeded in satisfying the standard signal characteristics (PRSNR) values of' 15, which are lower than those for the media with a thin compound layer. This was confirmed to be due to the fact that it failed in preserving excellent recording characteristics on the first information layer because such a thick compound layer deviated from its optimal combination of refraction index (n) and absorption coefficient (k) with respect to the thickness of other layers.

Furthermore, it was confirmed that the use of' a representative element-containing compound layer made of any of Al₂O₃, SiO₂, InO₂ and SnO₂ can produce similar results.

## Claims

1. A dual-layer recordable optical recording medium, comprising:
a first information layer; an intermediate layer disposed over the first information layer; and a second information layer disposed over the intermediate layer, the first information layer, the intermediate layer, and the second information layer being sequentially deposited from a laser irradiation side,
wherein the first information layer comprises, from the laser irradiation side, at least a thin film containing Bi as a main ingredient (Re layer), a dielectric layer, a reflective layer and a thermal diffusion layer, and the second information layer comprises, from the laser irradiation side, at least a thin film containing Bi as a main ingredient (Re layer), a dielectric layer and a reflective layer, and
wherein the ratio of the thickness of the dielectric layer of the second information layer (t2) to the thickness of the dielectric layer of the first information layer (t1), t2/t1, is in a range of 0.7 to 1.5 or 4.5 to 6.0.

2. The dual-layer recordable optical recording medium according to claim 1, wherein the thermal diffusion layer comprises an electrically conductive oxide with a specific resistance of 1x10⁻¹ Ωcm or less

3. The dual-layer recordable optical recording medium according to claim 2, wherein the electrically conductive oxide is one of IZO (In₂O₃-ZnO) and ITO (In₂O₃-SnO₂).

4. The dual-layer recordable optical recording medium according to any one of' claims 1 to 3, wherein the ratio of the thickness of the thermal diffusion layer of the first information layer (I2) to the thickness of the reflective layer of the first information layer (T1), T2/T1, is in a range of 2 to 8.

5. The dual-layer recordable optical recording medium according to claim any one of claims 1 to 4, wherein the thickness of the thermal diffusion layer of the first information layer is 30nm to 90nm.

6. The dual-layer recordable optical recording medium according to any one of claims 1 to 5, wherein the thickness of the Re layer of the first information layer is 5nm to 25nm, the thickness of the dielectric layer of the first information layer is 10nm to 30nm, the thickness of the Re layer of the second information layer is 5nm to 25nm, and the thickness of the dielectric layer of the second information layer is 10nm to 30nm.

7. The dual-layer recordable optical recording medium according to any one of claims 1 to 5, wherein the thickness of the Re layer of' the first information layer is 5nm to 25nm, the thickness of the dielectric layer of the first information layer is 10nm to 30nm, the thickness of the Re layer of the second information layer is 5nm to 25nm, and the thickness of the dielectric layer of the second information layer is 90nm to 120nm.

8. The dual-layer recordable optical recording medium according to any one of claims 1 to 7, further comprising:
a layer that comprises as main ingredient a representative element-containing compound, or a representative element-containing compound layer,
wherein the representative element-containing compound layer is provided at a position closer to the laser irradiation side than is the Re layer of the first information layer.

9. The dual-layer recordable optical recording medium according to claim 8, wherein the thickness of the representative element-containing compound layer is 70nm or less.

10. The dual-layer recordable optical recording medium according to any one of claims 1 to 9, wherein the Re layer comprises a Bi oxide as a main ingredient.

11. The dual-layen recordable optical recording medium according to any one of claims 1 to 10, wherein the Re layer comprises one or more elements selected from Al, Cr, Mn, Sc, In, Ru, Rh, Co, Fe, Cu, Ni, Zn, Li, Si, Ge, Zr, Ti, Hf, Sn, Pb, Mo, V, B, and Nb.

12. The dual-layer recordable optical recording medium according to any one of claims 1 to 11, wherein the dielectric layer of' each of the first information layer and second information layer comprises ZnS and SiO₂ as main ingredients.

13. The dual-layer recordable optical recording medium according to claim 12, wherein the mixing ratio of ZnS to SiO₂ ranges from 70:30 to 90:10 (mol%).

14. The dual-layer recordable optical recording medium according to any one of claims 8 to 13, wherein the representative element contained in the representative element-containing compound layer is at least one element selected from Zn, In, Al, and Sn.

15. The dual-layer recordable optical recording medium according to any one of claims 1 to 14, wherein the reflective layer of the first information layer is provided at a position farther from the laser irradiation side than is the dielectric layer of the first information layer, and the reflective layer of' the second information layer is provided at a position farther from the laser irradiation side than is the dielectric layer of the second information layer.
